Europäisches Patentamt

European Patent Office

Office européen des brevets

(11) Numéro de publication: **0 311 509 B1**

## FASCICULE DE BREVET EUROPEEN

(45) Date de publication de fascicule du brevet: **05.08.92**  (51) Int. Cl.⁵: **B60R  22/20**

(21) Numéro de dépôt: **88402510.7**

(22) Date de dépôt: **04.10.88**

(54) Dispositif de maintien pour sangle de ceinture de sécurité à réglage manuel de la position.

(30) Priorité: **07.10.87 FR 8713866**
         **10.02.88 FR 8801599**

(43) Date de publication de la demande:
   **12.04.89 Bulletin  89/15**

(45) Mention de la délivrance du brevet:
   **05.08.92 Bulletin  92/32**

(84) Etats contractants désignés:
   **DE ES GB IT SE**

(56) Documents cités:
   **EP-A- 0 086 633**
   **EP-A- 0 180 306**
   **FR-A- 2 299 875**
   **FR-A- 2 362 641**
   **LU-A- 59 744**

(73) Titulaire: **ECIA - EOUIPEMENTS ET COMPO-
SANTS POUR L'INDUSTRIE AUTOMOBILE**

**F-25400 Audincourt (Doubs)(FR)**

(72) Inventeur: **Escaravage, Gérard**
**5 Impasse des Graverots**
**F-25700 Valentigney(FR)**
Inventeur: **Henriot, Michel**

**F-25150 Ecurcey(FR)**
Inventeur: **Négri, Antoine**
**5 Rue des Courts Champs**
**F-25310 Hérimoncourt(FR)**

(74) Mandataire: **Mestre, Jean et al**
**c/o CABINET LAVOIX 2, place d'Estienne
d'Orves**
**F-75441 Paris Cédex 09(FR)**

## Description

La présente invention est relative aux ceintures de sécurité pour véhicule de transport de passagers, notamment terrestre, et a pour objet, plus particulièrement, un dispositif de maintien pour sangle de ceinture de sécurité à réglage manuel de la position et destiné à être fixé à une structure.

Comme on le sait, pour des raisons de sécurité, les véhicules de transport de passagers sont, habituellement, pourvus de sièges équipés de ceinture de sécurité. C'est par exemple le cas des aéronefs et des véhicules automobiles.

Pour les véhicules automobiles, on utilise habituellement des ceintures de sécurité à deux ou trois points d'ancrage. Lorsqu'on utilise une ceinture de sécurité à trois points d'ancrage, la sangle comprend un brin ventral et un brin pectoral qui traverse la poitrine du porteur à la manière d'une courroie de baudrier.

Lorsqu'on se sert d'une ceinture de sécurité de ce dernier type le brin pectoral occupe une position, par rapport à son porteur, qui est fonction, à la fois, de la morphologie de celui-ci, de la géométrie du véhicule et du siège et, aussi de l'état de fatigue de ce dernier. Dans ces conditions le brin pectoral peut se trouver, dans certains cas, au niveau du cou du porteur. On comprend donc que lors d'une collision violente, la ceinture de sécurité étant immobilisée sous la commande d'un détecteur d'inertie, le corps du passager se trouve violemment propulsé en avant et son cou rencontre la sangle qui peut alors se comporter non plus comme un moyen de sécurité mais comme un objet particulièrement dangereux. En effet, on a pu constater, dans certains cas de collision, des lésions graves du cou provoquées par la ceinture de sécurité et, plus particulièrement, son brin pectoral.

C'est pourquoi on a déjà proposé de faire en sorte que le point d'amarrage supérieure du brin pectoral soit de position réglable pour tenir compte de la morphologie du porteur comparée à la configuration du véhicule.

Différents dispositifs ont déjà été proposés. Très souvent ils sont d'une configuration telle que le point d'amarrage supérieur du brin pectoral peut occuper des positions multiples situées à l'intérieur d'un domaine dont l'amplitude tient compte des morphologies extrêmes d'une population comparée à sa moyenne.

Ces dispositifs, qui sont parfois motorisés, sont d'une très grande complication. Ils font très souvent appel à des mécanismes à vis et écrou qui permettent donc de faire varier progressivement la position du point d'amarrage supérieur du brin pectoral.

D'autres modes de réalisation font appel à des cliquets et à des trous par rapport auxquels se déplacent des mécanismes à chariot mobile.

D'autres variantes d'exécution font appel à des mécanismes à verrou équipé d'un pêne et d'une gâche

Un état de la technique est illustré par le document EP-A-086 633. Selon ce document, le réglage de la hauteur du brin pectoral de la ceinture de sécurité est obtenu à l'aide d'un tourillon à contour non circulaire qui est mobile en rotation et en translation dans une fente munie de découpes dont le diamètre est supérieur à la largeur de la fente.

Un autre état de la technique est illustré par le document LU-A-59 744. Tous les éléments divulgués par ce document et qui sont nécessaires à l'invention sont exposés dans le préambule de la revendication principale.

On comprend donc que tous ces dispositifs sont compliqués et, de ce fait, peu fiables et d'un coût relativement élevé.

L'invention se propose de réaliser un dispositif de maintien pour sangle de sécurité à réglage manuel de la position et destiné à être fixé à une structure qui ne présente pas ce type d'inconvénient, qui soit relativement simple et d'un coût de fabrication et de mise en place relativement modique.

L'invention a pour objet un dispositif de maintien pour sangle de sécurité à réglage manuel de la position et destiné à être fixé à une structure d'un type énoncé dans le préambule de la revendication principale et dont les particularités ressortent notamment de la partie caractérisante de celle-ci.

D'autres caractéristiques de l'invention ressortiront de la lecture de la description et des revendications qui suivent et de l'examen du dessin annexé, donné seulement à titre d'exemple, où :

- la fig.1 est une vue de face d'un mode de réalisation d'un dispositif suivant l'invention ;
- la Fig.2 est une coupe longitudinale de la Fig. 1 ;
- la Fig.3 est une vue perspective éclatée d'un autre mode de réalisation d'un dispositif selon l'invention ;
- les Fig.4A et 4B sont des vues de détail du verrou de la Fig.3 permettant de comprendre son fonctionnement ; et
- la Fig.5 est une section transversale du dispositif selon la Fig.3 une fois sa mise en place sur la structure faite où la demi-vue de droite est une section par l'axe transversal d'une découpe et où la demi-vue de gauche est une section par l'axe transversal de l'ouverture.

Les ceintures de sécurité et les agencements destinés à leur montage, en particulier les ceintures de sécurité pour véhicule automobile étant bien connus dans la technique, la description qui suit sera limitée à ce qui concerne directement ou indirectement l'invention. Pour le reste le spécialiste du secteur technique considéré pourra puiser dans les solutions classiques à sa disposition pour faire face aux problèmes particuliers qu'il a à résoudre.

Comme on le voit sur les figures du dessin, l'invention concerne un dispositif de maintien pour sangle de ceinture de sécurité à position réglable manuellement, qui est destiné à être fixé à une structure ou coque 10 d'un véhicule. Plus particulièrement, la partie de structure considérée est le montant central, ou pied milieu, qui se trouve entre les portières latérales avant et arrière d'un véhicule à quatre portes.

Le dispositif suivant l'invention, comprend entre autres, un corps 20, un support de sangle 50, un tourillon 60 et, éventuellement, un capot 170.

La structure ou coque 10 est pourvue d'une ouverture 11 et d'un trou 12 sur les rôles desquels on reviendra par la suite.

Le corps 20, de configuration générale en étrier, comprend une embase 21 et deux socles d'ancrage 22. Chaque socle d'ancrage 22 comprend une branche 221, pratiquement perpendiculaire à l'embase 21, qui est terminée du côté de son extrémité libre par un rebord 222. Cette configuration en étrier ménage un évidement 211 à l'arrière de l'embase 21. Comme illustré, l'embase 21 est transpercée d'une fente 210, longitudinale, munie à au moins chacune de ses deux extrémités d'une découpe 212.

Comme représenté, les découpes 212 sont au moins partiellement circulaires et leur diamètre est supérieur à la largeur de la fente 210. Dans le mode de réalisation illustré, seules deux découpes sont pratiquées aux extrémités de la fente mais il est clair que suivant la longueur donnée au corps, et en fonction des besoins, il est possible de faire d'autres découpes intermédiaires à des intervalles déterminés, par exemple équidistants.

Comme cela ressort de l'examen des figures, le support de sangle 50 comprend un bâti 51 percé d'un orifice 52 et est équipé d'un renfort 53. Dans le bâti est ménagé un passage 54 pour une sangle, non représentée. Cette sangle traverse, de préférence, librement ce passage où elle peut circuler.

Le support de sangle 50 est assujetti au corps 20 à l'aide d'un tourillon 60. Comme on le voit nettement illustré sur les figures, le tourillon 60 se compose d'un talon 61, d'une tige 62 et d'un embout 63 auquel on associe des moyens de retenue et des organes de préhension.

Comme on l'observe sur les figures, le talon 61, dans ce mode de réalisation circulaire en forme de disque, possède au moins une de ses dimensions qui est supérieure à celles des découpes 212 de manière que lorsqu'il est engagé dans l'évidement 211 il ne puisse pas traverser la fente 210.

La tige 62 est faite de manière que sa section droite présente un contour non circulaire inscriptible dans les découpes et de manière à avoir deux axes transversaux orthogonaux l'un, le grand axe, tout juste égal au diamètre de la découpe et l'autre, le petit, tout juste égal à la largeur de la fente. Par exemple cette tige est cylindrique et on y ménage deux méplats 621 diamétralement opposés, comme représenté.

L'embout 63 est muni de moyens de retenue constitués, par exemple d'un filetage 631 sur lequel vient se visser un écrou 632.

Cet embout est aussi muni d'organes de préhension sur lesquels on reviendra par la suite. Ces organes de préhension sont associés au tourillon de manière à être solidaires en rotation de ce dernier afin que lorsqu'on fait basculer les organes de préhension suivant l'axe longitudinal du tourillon ce dernier soit entraîné en rotation.

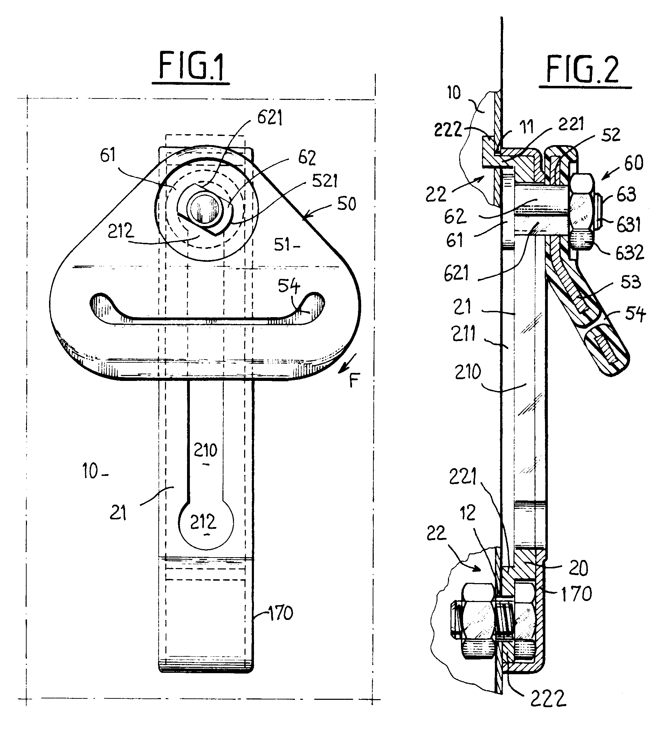

Le corps 20, le support de sangle 50 et le tourillon 60 sont assemblés comme il est illustré en particulier sur la Fig.2.

En examinant la Fig.1, on voit que pour l'orientation normale du support de sangle, par gravité par exemple, le grand axe transversal de la tige du tourillon est incliné par rapport à l'axe longitudinal de la fente.

Du fait des dimensions relatives données au talon et à la tige du tourillon d'une part, et aux découpes et à la fente de l'embase d'autre part, on voit que lorsque le support de sangle occupe sa position normale ce dernier se trouve emprisonné dans l'une des découpes et il peut y tourner d'un angle déterminé fonction de l'inclinaison du grand axe transversal de la tige du tourillon par rapport à l'axe longitudinal de la fente sans pouvoir s'en dégager. On comprend donc que lorsqu'on fait tourner volontairement le tourillon à l'aide des organes de préhension, on puisse donner au grand axe transversal de la tige une orientation parallèle à celle du grand axe de la fente et alors le tourillon peut se déplacer dans cette dernière pour quitter la découpe dans laquelle il est engagé et gagner l'autre découpe où après avoir repris son orientation normale le support de sangle se trouve alors retenu.

Dans ce mode de réalisation les organes de préhension sont confondus avec le support de sangle. Pour ce faire, on donne à l'orifice 52 un profil 521 complémentaire de celui de la tige 62 à section droite de contour non circulaire. Ainsi lorsque le support de sangle 50 est engagé sur la tige 62 et immobilisé par l'écrou 632 il suffit de saisir le support de sangle et de le basculer dans le sens de la flèche F de la Fig.1 pour le déplacer d'une position à l'autre.

Au lieu d'utiliser une telle solution comme illustré, il est clair que le support de sangle peut être monté de manière à pouvoir tourner relativement au tourillon et qu'on peut munir l'embout de ce dernier d'organe de préhension tels que par exemple en faisant en sorte que l'écrou hexagonal 632 représenté soit remplacé par un écrou à oreilles.

Il est clair que les dimensions relatives assurent un jeu suffisant pour permettre des basculements et des translations aisés.

De préférence, le corps 20 est fait en métal et le support de sangle 50 est fait d'un bâti 51 en matière synthétique dans lequel est noyé un renfort 53 métallique, comme illustré.

Le dispositif suivant l'invention est assujetti à la structure comme dessiné par exemple ; on voit que dans cette solution l'un des rebords 222 d'un socle d'ancrage est engagé dans l'ouverture 11 de la structure et que l'autre rebord aussi percé d'un trou non référencé, est maintenu grâce à un boulon non référencé, engagé dans le trou 12, comme illustré à titre d'exemple.

Pour des raisons d'esthétique, le dispositif selon l'invention est éventuellement muni d'un capot 170 approprié par exemple en matière plastique. Dans un tel cas on fixe d'abord à la structure 10 le corps 20 préalablement équipé de son tourillon 60 puis ensuite on place le capot, on engage le support de sangle et on met en place les moyens de retenue.

Dans ce mode de réalisation, on a dessiné deux découpes à chacune des extrémités de la fente mais il est clair que l'on peut en ménager d'autres entre ces dernières pour avoir des positions intermédiaires.

On voit donc tout l'intérêt de l'invention qui permet d'obtenir un dispositif de maintien pour sangle de sécurité à réglage manuel de la position qui comprend un nombre minimum de pièces, qui est d'un fonctionnement très simple et fiable et d'un coût de fabrication et de montage acceptable.

Toutefois un tel mode de réalisation peut poser des problèmes de fonctionnement. En effet, sa fente étant dégagée sur la plus grande partie de sa longueur, des éléments étrangers peuvent s'y introduire et gêner ou empêcher ensuite le déplacement du tourillon pour régler la position de la sangle. Outre un tel désagrément, il peut se faire que des enfants y introduisent par jeu des clés ou autres objets ce qui n'est pas sans créer de perturbations.

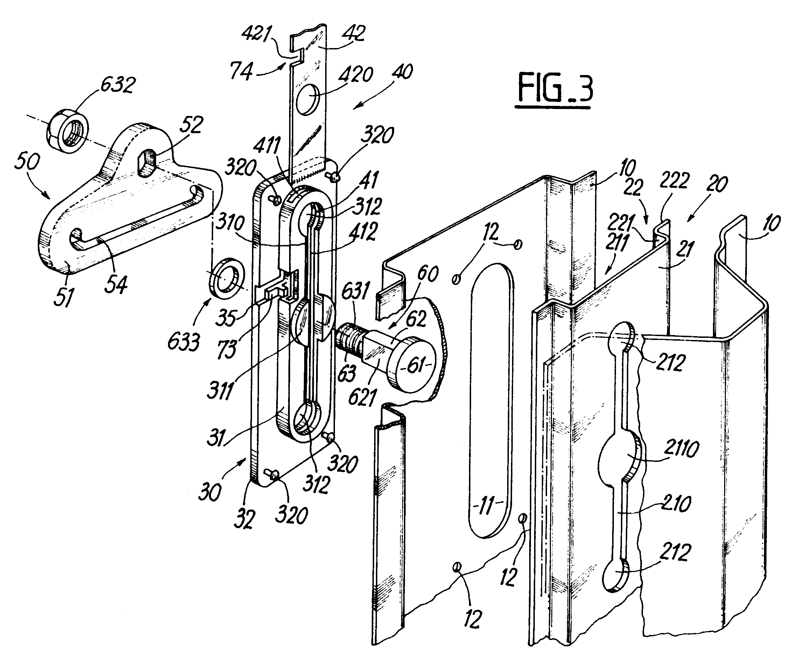

Pour remédier à ce type de désagrément un autre mode de réalisation, illustré sur les Fig.3, 4 et 5 a été élaboré.

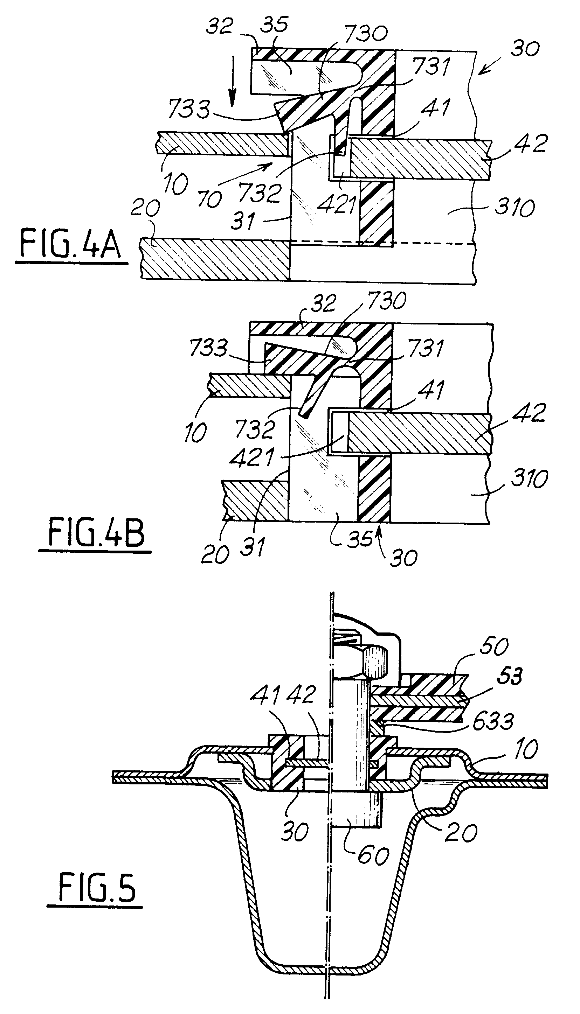

Comme cela apparaît mieux sur la section de la Fig.5, dans ce cas la structure 10 se présente par exemple à la manière d'une colonne creuse faite, par exemple, de deux poutres approximativement en U accolées tête-bêche l'une à l'autre de manière que leurs concavités respectives se fassent face. Ce type de colonnes creuses obtenues en tôles embouties mécano-soudées est classique dans l'industrie automobile en particulier.

Cet autre mode de réalisation du dispositif suivant l'invention, comprend entre autres, un corps 20, une entretoise 30, un système de protection 40, un support de sangle 50, un tourillon 60 et un verrou 70.

On décrira maintenant chacun de ces constituants.

Comme on le voit en particulier sur la Fig.3, l'une des poutres de la structure 10 est percée d'une boutonnière 11 oblongue et de trous 12 sur lesquels on reviendra par la suite.

Le corps 20, de configuration générale en étrier, comprend une embase 21 bordée de deux socles d'ancrage 22.

L'embase 21 est transpercée d'une fente longitudinale 210 où sont ménagées une ouverture 2110 et au moins deux découpes 212. L'ouverture 2110 et les découpes 212 sont circulaires, de préférence, et de dimensions différentes, l'ouverture 2110 étant plus grande que les découpes 212 pour les raisons que l'on exposera par la suite.

Comme illustré, les socles 22 présentent des branches 221 pratiquement normales à l'embase 21 et terminées par des rebords 222 pratiquement parallèles au plan de l'embase. Grâce à cette configuration en étrier, on ménage d'un côté un évidement 211 entre les socles 22 et au droit de la fente 210 et à l'opposé une saillie correspondante.

Dans ce mode de réalisation, on a représenté seulement deux découpes 212 mais il est clair que suivant la longueur donnée au corps et à la fente qui est ménagée dans ce dernier, il est possible d'utiliser d'autres découpes, régulièrement ou non réparties, entre les deux extrémités de la fente.

Comme on le voit clairement sur la Fig.3, l'entretoise 30 comprend un banc 31 associé à une plaque 32.

Le banc 31 qui est en saillie sur l'une des faces de la plaque 32, a un contour complémentaire de celui de la boutonnière 11 dans laquelle il peut s'engager relativement facilement, avec très peu de jeu d'une manière telle que lorsque la plaque 32 est en appui contre la structure 10, le banc 31 prend au moins partiellement appui contre le corps 20 comme cela apparaît clairement en examinant la Fig.5.

Le banc 31 est percé d'une fente 310 et de découpes 312 dont les dimensions et la disposition relative correspondent pratiquement à l'identique à celles de la fente 210 et des découpes 212 pratiquées dans le corps 20. Le banc porte aussi, à l'opposé de la plaque 32, une protubérance 311. Les dimensions de cette protubérance 311 sont telles qu'elle peut pratiquement s'engager sans jeu dans l'ouverture 2110 de manière que lorsqu'elle est en place elle ne dépasse pas sur la face opposée du corps 20, comme cela apparaît sur la demi-section de gauche de la Fig.5; la saillie de la protubérance 311 sur la banc 31 est au plus égale à l'épaisseur du corps 20.

Dans le banc 31 et la plaque 32 est aussi ménagé un logement 35 latéral pour la raison qui apparaîtra par la suite. Ce logement est destiné à recevoir une partie du verrou 70.

Le dispositif suivant l'invention comprend aussi un système de protection 40.

Ce système de protection se compose d'une saignée 41 pratiquée dans l'entretoise 30 et, plus spécialement, dans le banc 31. Cette saignée 41, qui est pratiquement parallèle au plan de la plaque 32, comprend des embouchures 411 qui transpercent le banc 31 dans le prolongement axial de la fente 310 et apparaissent sur son contour et des gorges latérales 412 qui débouchent dans la fente 310 sur chacun de ses grands côtés, comme cela apparaît notamment sur la Fig.3.

Ce système de protection se compose aussi d'un ruban 42 relativement flexible et élastique de manière à pouvoir être au moins momentanément cintré ou incurvé, dans lequel sont ménagés une lumière 420 et un cran 421 sur lesquels on reviendra par la suite. Ce ruban est normalement engagé dans la saignée 41 de manière à pouvoir y coulisser librement. De préférence, la longueur de ce ruban est au moins égale au double de la longueur du banc 31 pour la raison qui apparaîtra clairement ultérieurement. La lumière 420 est destinée à recevoir la tige 62 du tourillon 60 dont il sera question par la suite ; la tige peut tourner librement dans la lumière.

Le ruban 42 est par exemple fait d'un feuillard métallique ou d'une bande de matière synthétique telle que par exemple du polytéréphtalate d'éthylène glycol du type de celui connu dans le commerce sous la désignation de "mylar".

Le dispositif selon l'invention comprend aussi un support de sangle 50. Dans le mode de réalisation que l'on décrit, ce support de sangle 50 est en fait, de préférence, le renvoi qui permet à une sangle, non dessinée, de changer de direction pour que son brin pectoral aille rejoindre un enrouleur. Il est clair que ce support de sangle au lieu d'être un renvoi peut être tel que la sangle au lieu de pouvoir y coulisser y soit amarrée à demeure sans pouvoir se déplacer relativement à lui.

Ce support de sangle 50 se compose d'un bâti 51, d'un orifice de montage 52, d'un renfort 53 et d'un passage de sangle 54. Une sangle, non dessinée, traverse normalement librement le passage 54 comme il est classique.

Comme il est courant le support de sangle 50 est fait d'un bâti 51 de préférence en matière synthétique dans lequel est noyé le renfort 53 par exemple métallique, comme illustré.

Le dispositif suivant l'invention comprend aussi un tourillon 60.

Ce tourillon comprend un talon 61, une tige 62 et un embout 63.

Le talon 61 se présente à la manière d'un disque dont le diamètre lui permet de s'engager relativement librement dans l'ouverture 2110 du corps mais ne lui permet pas de se dégager ou de sortir des découpes 212 et 312 en les traversant, quelle que soit l'orientation donnée au tourillon.

La tige 62 à section non circulaire présente par exemple deux axes orthogonaux de longueurs différentes qui sont telles que la tige d'une part puisse tourner relativement librement dans les découpes 212 et 312 et d'autre part puisse coulisser relativement librement dans les fentes 210 et 310 lorsque son grand axe est parallèle à celui de ces fentes, son petit axe étant d'une dimension au plus égale à la largeur des fentes 210 et 310. La tige 62 est par exemple cylindrique et on y a ménagé deux méplats 621 diamètralement opposés.

L'embout 63 porte par exemple un filetage 631 destiné à recevoir un écrou 632 et une rondelle 633 par exemple qui, ensemble, constituent des moyens de retenue.

Pour des raisons d'esthétiques on place sur les moyens de retenue un capuchon qui s'y encastre par exemple élastiquement. Un tel capuchon, non référencé, est représenté sur la demi-vue de droite de la Fig. 5.

Le dispositif suivant l'invention comprend de plus, de préférence mais non obligatoirement, un verrou 70 qui se compose d'un pène 73 et d'une gâche 74.

La gâche 74 est associée au ruban et est constituée par exemple du cran 421 découpé suivant un bord longitudinal de celui-ci, comme dessiné sur la Fig.2.

Le pène 73 est associé à l'entretoise 30 et est disposé de manière à occuper le logement 35 (voir Fig.4 pour le détail). Ce pène 73 est constitué d'un linguet 730 relié au banc 32 à l'aide d'une articulation 731 ; ce linguet 730 présente un bec 732 destiné à s'engager dans le cran 421 et un appui 733 destiné à venir reposer contre la structure 10 (voir Fig.4B).

Le linguet 730 est mobile entre une position active où son bec 732 est engagé dans le cran 421 du ruban pour l'immobiliser (Fig.4A) et une position inactive où ce bec est séparé du cran du ruban de manière à libérer ce dernier pour qu'il puisse coulisser dans la saignée lorsque l'appui repose contre la structure (Fig.4B).

L'entretoise 30 porte aussi une fixation 320 destiné à coopérer avec les trous 12 de la structure 10. Cette fixation est, par exemple faite de pions élastiques encliquetables constitués d'une cheville fendue terminée par une tête conique à épaulement, comme dessiné schématiquement sur la Fig.3.

Le tourillon 60 est aussi destiné à recevoir des moyens de préhension qui permettent de le faire tourner selon son axe de manière à pouvoir le faire coulisser dans les fentes 210 et 310 pour le faire passer d'un couple de découpes 212 et 312 à un autre afin de modifier la position du support de sangle.

L'orifice de montage 52 du support de sangle 50 est destiné à recevoir le tourillon et particulièrement sa tige 52. Le profil de cet orifice de montage 52 est, de préférence, complémentaire du profil de la tige 62 de manière que lorsqu'on saisit le support de sangle on puisse faire basculer le tourillon avec lui. Dans ce cas, c'est le support de sangle qui sert, lui même, d'organes de préhension. Autrement le support de sangle peut être monté fou sur le tourillon, le profil de l'orifice de montage lui permettant alors de tourner librement relativement à la tige et/ou l'embout ; dans ce cas on utilise par exemple un écrou 632 à oreilles qui sert alors d'organes de préhension. Le capuchon lui est alors convenablement adapté.

Le dispositif selon l'invention est tel que l'entretoise 30, le tourillon 60 notamment et, aussi, s'il y a lieu, le support de sangle 50, le système de protection 40, ainsi que les moyens de retenue et les organes de préhension sont réunis en une entité indépendante, par exemple amovible, qui est de préférence assemblée séparément pour constituer un sous-ensemble qui est ensuite rapporté et fixé sur la structure, équipée indépendamment du corps 20.

Le corps 20 est associé à la structure 10 de manière à être situé à l'intérieur de la colonne creuse comme cela apparait clairement sur la Fig.5, et y est fixé par exemple par soudage par points.

Les mises en place relatives du corps 20 et de la structure 10 sont telles que la boutonnière 11 et la fente 210 sont à l'aplomb l'une de l'autre de manière que lorsque l'entretoise 30 est placée sur la structure et le banc 31 engagés dans la boutonnière 11, les fente 310, protubérance 311 et découpes 312 de l'entretoise 30 sont le plus rigoureusement possible alignées et en correspondance avec les fente 210, ouverture 2110 et découpes 212, respectivement, du corps 20.

On voit donc que le corps fixé sur la structure suit les pérégrinations de celle-ci au cours des traitements de protection contre la corrosion notamment et lors de la mise en peinture finale qu'elle subit.

Le corps 20 du dispositif suivant l'invention ne présente aucun élément apparent ou en saillie à l'extérieur de la structure 10. On comprend donc qu'il n'apporte aucune gêne de quelque nature quelle soit.

Pour procéder à l'assemblage du sous-ensemble que forme l'entité qui est composée notamment de l'entretoise 30, du support de sangle 50, du tourillon 60 et du système de protection 40, on opère de la manière suivante.

On engage le ruban 42 dans la saignée 41 en l'introduisant par l'une des embouchures 411 et on l'y fait glisser jusqu'à ce que son cran 421 s'engage dans le bec 732 du verrou 70.

Les positions relatives du cran 421 et de la lumière 420 ménagés dans le ruban 42 sont telles que lorsque le ruban est immobilisé par le verrou 70, la lumière 420 se trouve centrée sur la protubérance 311.

On engage alors, convenablement dirigé, le tourillon 60 en faisant en sorte que le grand axe de sa tige 62 soit parallèle à la fente 310 et on lui fait traverser la lumière 420 du ruban jusqu'à ce que son talon 61 repose contre la protubérance 311.

On enfile alors la rondelle 633 puis s'il y a lieu le support de sangle 50 en veillant à ce que son orifice de montage 52 s'engage correctement sur la tige 62, puis on place et serre l'écrou 632 sur le filetage 631 de l'embout 63 pour immobiliser le tout.

Les dimensions de la tige 62 sont choisies de manière que lorsque l'écrou est normalement serré il n'y a pratiquement pas de jeu axial. Pour parvenir à cet effet, la rondelle 633 est, par exemple une rondelle élastique.

Pour le cas où il n'est pas nécessaire de munir immédiatement le tourillon du support de sangle et de l'écrou, le support de sangle étant associé à la sangle proprement dite par exemple, la rondelle 633 est choisie pour assurer aussi un serrage sur le tourillon afin que les composants ainsi réunis demeurent assemblés ensemble, sans risquer de les voir se séparer spontanément.

Ceci fait, on voit que l'on a constitué une entité dont tous les composants sont immobilisés relativement les uns aux autres puisque le tourillon en particulier reste dans une position où son talon 61 est en appui contre la protubérance 311 grâce à l'action du verrou 70 qui occupe la position de la Fig.4A.

Il suffit alors de présenter cette entité sur la structure achevée en faisant en sorte d'engager le banc 31 dans la boutonnière 11 tout en cintrant les extrémités du ruban 42 qui débordent des embouchures 411 pour les faire pénétrer préalablement dans la boutonnière 11. En opérant ainsi, les fixations 320 s'engagent aussi dans les trous 12. En pressant le tout, la plaque 32 vient reposer contre la structure 10 et les fixations, après encliquetage, se dilatent et maintiennent le tout en place si besoin est de manière définitive, indémontable. Simultanément l'appui 733 du linguet 730 est entré en contact entre la structure et le linguet a basculé grâce à son articulation 731 pour quitter sa position de la Fig.4A et prendre la position illustrée sur la Fig.4B : le bec 732 s'est dégagé du cran 421 et le ruban 42 est libéré; le ruban et tout ce qui lui est associé peuvent maintenant coulisser librement dans les fentes si le tourillon, et en particulier sa tige, sont convenablement orientés par rapport à celles-ci.

On voit donc que l'entité préalablement assemblée est maintenant fixée sur la structure.

Le verrou 70 est passé de sa position active de la Fig.4A à sa position inactive de la Fig.4B où il est neutralisé. Le verrou 70 est donc mis hors d'action et le ruban 42 n'étant plus retenu, on peut saisir les moyens de préhension, ici le support de sangle 50 dans ce mode de réalisation, pour les déplacer vers l'un ou l'autre des couples de découpes. En faisant ceci le tourillon glisse dans les fentes et lorsqu'il atteint l'un ou l'autre des couples de découpes on le fait basculer s'il ne bascule pas de lui même sous l'action de la gravité et/ou de la tension de la sangle.

En accomplissant ceci, son grand axe ne reste plus aligné avec celui des fentes et le tourillon peut tourner dans les découpes. Lorsqu'il a tourné d'un certain angle, la tige 62 est logée dans un couple de découpes pour ne plus en sortir.

Si l'on souhaite maintenant placer le support de sangle dans un autre couple de découpes, il suffit de répéter l'opération en sens inverse, c'est-à-dire de tourner sur lui même le tourillon de manière à réaligner son grand axe avec celui des fentes puis de déplacer l'ensemble et une fois le tourillon dans l'autre couple de découpes de faire en sorte qu'il tourne d'un certain angle pour qu'il y soit de nouveau retenu.

Les dimensions de la protubérance 311 étant telles qu'elle ne fait pas saillie sur le corps 20 lorsque l'entretoise 30 est définitivement mise en place, le talon 61 peut circuler librement à l'aplomb de l'évidement 211 du corps, sans entrave.

Pour favoriser la mobilité et permettre des glissements aisés on dispose, s'il y a lieu, aux endroits appropriés des rondelles anti-friction convenables pour empêcher un contact direct métal-métal. On place une telle rondelle par exemple entre le talon 61 et l'embase 21. On utilise par exemple des rondelles en, ou revêtues de, polytétrafluoroéthylène connu couramment sous la désignation de "Téflon".

Il est clair que le système de protection 40 et/ou le verrou 70 dont on a équipé le dispositif suivant l'invention ne sont pas indispensables et peuvent ou pas être présents.

Si l'on n'utilise pas de verrou 70, le montage est quelque peu moins facile puisqu'il faut rechercher par tâtonnements la position précise à donner au tourillon pour que son talon 61 se trouve au droit de l'ouverture 2110. La fixation est moins rapide et moins automatique.

De même, le système de protection 40 n'est pas indispensable. Si l'on s'en dispense on retrouve certains des inconvénients énumérés précédemment.

On comprend donc tout l'intérêt du dispositif selon l'invention et tous les avantages qu'il apporte puisqu'on peut réaliser un assemblage final en "aveugle" sur une chaîne de production, une partie du dispositif ayant été constituée et réunie sous forme d'une entité constituant un sous-ensemble que l'on peut facilement mettre en place soit manuellement soit automatiquement à l'aide de robots, automates ou analogues.

La manière dont l'entretoise est fixée sur la structure peut être différente. Au lieu d'utiliser une fixation répartie au voisinage de chacun des angles de la plaque 32 et qui font partie de l'entretoise, on peut par exemple se servir de rivets du type de ceux dénommés "pop" que l'on peut mettre en place, aussi, en aveugle.

De préférence, l'entretoise 30 est faite en une matière que l'on peut mouler facilement par exemple une matière plastique appropriée qui présente une certaine flexibilité et élasticité au moins dans la zone de l'articulation 731 afin que le linguet, avant montage définitif sur la structure demeure dans la position où il est illustré sur la Fig. 4A. En effet, comme on a pu l'observer, cette pièce n'est pratiquement utilisée que pour le montage puisqu'elle ne reçoit ensuite aucun effort. On observera que si la ceinture de sécurité avait à exercer son office, en cas de décélération brusque, tous les efforts qui sont transmis par la sangle au support de sangle sont retransmis par ce dernier au tourillon dont le talon est toujours en appui contre le corps 20. Ce corps 20 est de préférence réalisé en une tôle relativement épaisse, d'une dimension et d'une nuance qui lui permet d'absorber des efforts importants qui sont ensuite convenablement répartis, par ses socles, sur la structure.

Du fait des dimensions relatives données au talon et à la tige du tourillon 60, d'une part, et aux découpes, fentes et ouverture de l'entretoise 30 et du corps 20, d'autre part, on voit que lorsque le support de sangle occupe sa position normale, ce dernier se trouve emprisonné dans l'un des couples de découpes et il peut y tourner d'un angle déterminé fonction de l'inclinaison du grand axe transversal de la tige du tourillon par rapport à l'axe longitudinal des fentes sans pouvoir se dégager.

On comprend donc que lorsqu'on fait tourner volontairement le tourillon à l'aide des organes de préhension, on puisse donner au grand axe transversal de la tige une orientation parallèle à celle du grand axe des fentes et alors le tourillon peut se déplacer dans ces dernières pour quitter les découpes dans lesquelles il est engagé et gagner d'autres découpes où après avoir repris son orientation normale le support de sangle se trouve alors retenu.

Il est clair que les dimensions relatives assurent des basculements et des translations aisées.

La sécurité que procure l'invention, en particulier le mode de réalisation des Fig.3, 4 et 5, peut encore être améliorée.

En effet, en cas d'accident par exemple, une traction violente est exercée sur la sangle et transmise au tourillon 60 dont le talon 61 transmet l'effort au corps 20. Si cet effort atteint ou dépasse une certaine valeur, le corps 20 peut être déformé d'une manière telle que le talon 61 du tourillon puisse s'échapper.

Pour éviter ceci on munit les bords de la fente 210 d'ailes qui les prolongent en saillie du côté du talon ; ces ailes sont par exemple obtenues par pliage à angle droit de l'embase 21 dans le sens opposé à celui des branches 221. On munit aussi l'embase 21 de formes en relief de préférence en arc de cercle qui entourent partiellement les découpes 212 du côté du talon 61 du tourillon 60 ; ces formes par exemple obtenues par emboutissage sont destinées à assurer un bon appui au talon. De plus, si nécessaire, on munit encore les branches 221 du corps 20 d'emboutis en forme de cuvette dirigée vers l'extérieur du corps ; ces emboutis qui sont ménagés sur chacune des branches 221, de préférence approximativement à l'aplomb des découpes 212, sont destinés à en accroître la rigidité.

Afin de tenir compte de la hauteur de ces ailes saillantes et de ces formes en relief, la longueur de la tige 62 du tourillon 60 et, le cas échéant, la longueur de la protubérance 311 de l'entretoise 30 sont augmentées de la valeur de cette hauteur.

Grâce à ces dispositions supplémentaires, on comprend que si un effort trop important est exercé par le talon du tourillon sur le corps, celui-ci se déforme en direction de la structure 10. En se déformant, l'embase 21 du corps 20 se rapproche de la structure en fléchissant approximativement selon la ligne de raccordement des branches 221 avec les rebords 222 et les ailes saillantes, qui s'inclinent alors vers l'axe longitudinal de la fente 210 viennent se serrer sur la tige 62 du tourillon 60 car pressées contre celle-ci par le talon 61 qui appuie sur leur tranche libre. Ceci interdit la sortie du talon 61 au travers de la découpe 212 : la configuration de ces dispositions supplémentaires est "auto-serrante".

Ce qui précède permet de saisir tous les avantages apportés par le dispositif selon l'invention tant sur le plan de la simplicité que sur ceux du confort et de la sécurité.

## Revendications

1. Dispositif de maintien pour sangle de ceinture de sécurité à réglage manuel de la position et destiné à être fixé à une structure (10), constitué entre autres, d'un corps (20) avec une embase (21) percée d'une fente (210) et de socles d'ancrage (22) à la structure (10) et d'un support de sangle (50) associé au corps (20) et mobile relativement à ce dernier où l'embase (21) et les socles d'ancrage (22) du corps sont agencés de manière à ménager un évidement (211) à l'arrière de la fente (210), la fente (210) est munie au moins à chacune de ses extrémités de découpes (212) au moins partiellement circulaires dont le diamètre est supérieur à la largeur de la fente (210) et où le support de sangle (50) qui est percé d'un orifice (52) et le corps (20) sont associés à l'aide d'un tourillon (60) qui est constitué d'un talon (61) qui présente au moins une dimension supérieure à celle des découpes, d'une tige (62) et d'un embout (63) qui porte des moyens de fixation (631, 632), la section droite de cette tige (62) présentant sur toute sa longueur un contour non circulaire inscriptible dans les découpes avec deux axes transversaux orthogonaux l'un grand tout juste égal au diamètre de la découpe et l'autre petit tout juste égal à la largeur de la fente (210) et étant orientée en position normale pour que son grand axe ne soit pas parallèle à la fente (210) afin que lorsqu'on fait volontairement basculer suivant son axe le tourillon (60) engagé dans une découpe (212) on rende le grand axe transversal parallèle à la fente (210) pour pouvoir l'y déplacer avec le support de sangle (50), dispositif caractérisé en ce que l'embout (63) porte des organes de préhension et en ce que ce tourillon (60) est agencé de manière que le talon (61) soit logé à l'aplomb de l'évidement (211), la tige (62) traverse le corps (20) et le support de sangle (50) qui y est engagé par son orifice (52) et y est fixé par les moyens de retenue.

2. Dispositif selon la revendication 1, caractérisé en ce que le corps (20) à la configuration d'un étrier où les socles d'ancrage (22) présentent une branche (221) normale à l'embase (21) et terminée par un rebord (222).

3. Dispositif selon la revendication 1 ou 2, caractérisé en ce que la tige (62) se présente à la manière d'un cylindre avec deux méplats (621) diamétralement opposés.

4. Dispositif selon l'une quelconque des revendications 1 à 3, caractérisé en ce que l'orifice (52) du support de sangle (50) a un profil (521) complémentaire de celui du contour de la tige (62) de manière que le support de sangle (50) soit solidaire en rotation du tourillon (60) et serve d'organes de préhension.

5. Dispositif selon l'une quelconque des revendications 1 à 4, caractérisé en ce que les moyens de fixation sont constitués d'un filetage (631) de l'embout (63) et d'un écrou (632).

6. Dispositif selon l'une quelconque des revendications 1 à 5, caractérisé en ce que le support de sangle (50) est transpercé d'un passage (54) que peut traverser librement une sangle qui peut y circuler.

7. Dispositif selon l'une quelconque des revendications 1 à 6, caractérisé en ce que la structure (10) est percée d'une boutonnière (11), en ce que la fente (210) présente en plus des découpes (212) successives une ouverture (2110) dont la dimension est au moins égale à celle du talon (61) pour en permettre le passage, en ce qu'il comprend une entretoise (30) faite d'une plaque (32) associée à un banc (31) dont la dimension permet de l'insérer dans la boutonnière (11) et qui est transpercée d'une fente (310) et de découpes (312) pratiquement identiques à celles du corps (20) et destinées à être placées en correspondance avec elles et qui est munie d'une protubérance (312) dont la dimension est au plus égale à celle de l'ouverture (2110) pour en permettre le comblement et en ce que l'entretoise (30) est destinée à être placée de manière que sa plaque (32) repose contre la structure (10) et que son banc (31) soit engagé dans la boutonnière (11) afin que fentes et découpes du corps (20) et de l'entretoise (30) soient respectivement à l'aplomb les unes des autres et afin que la protubérance (311) occupe l'ouverture (2110), et en ce que le tourillon (60) est destiné à être placé de manière que le talon (61) puisse être disposé à l'opposé de l'évidement (211), la tige (62) puisse traverser la structure (10), le corps (20), l'entretoise (30) et le support de sangle (50) qui peut y être engagé par son orifice (52) et y être fixé par les moyens de retenue afin que lorsqu'on fait volontairement basculer le tourillon (60) engagé dans un couple de découpes (212,312) à l'aide des organes de préhension on rende le grand axe transversal parallèle aux fentes (210, 310) pour pourvoir l'y déplacer avec le support de sangle (50).

8. Dispositif selon la revendication 7, caractérisé en ce que le corps (20) est destiné à être solidarisé de la structure (10) et en ce que au moins l'entretoise (30), le tourillon (60) et avec au besoin le support de sangle (50) forment une entité indépendante rapportée sur la structure (10).

9. Dispositif selon la revendication 8, caractérisé en ce que l'entité (30, 60) est destinée à être posée en aveugle sur la structure (10) pour être réunie au corps (20).

10. Dispositif selon l'une quelconque des revendications 7 à 9, caractérisé en ce que l'orifice (52) du support de sangle (50) a un profil (521) complémentaire de celui du contour de la tige (62) de manière que le support de sangle (50) soit solidaire en rotation du tourillon (60) et serve d'organes de préhension.

11. Dispositif selon l'une quelconque des revendications 7 à 10, caractérisé en ce que l'entretoise (30) est munie d'un système de protection (40) pour interdire la pénétration d'éléments étrangers dans le dispositif.

12. Dispositif selon la revendication 11, caractérisé en ce que le système de protection (40) comprend une entretoise (30) qui est munie d'une saignée (41) orientée pratiquement parallèlement au plan de la plaque (32) et débouchant dans la fente (310) et sur le contour du banc (31), et un ruban (42) qui est monté coulissant dans la saignée (41) et transpercé d'une lumière (420) pour le passage libre de la tige (62) du tourillon (60) et dont la longueur est au moins égale à deux fois la longueur du banc (31).

13. Dispositif selon la revendication 12, caractérisé en ce qu'il comprend un verrou (70) avec un pène (73) associé à l'entretoise (30) et une gâche (74) associée au ruban (42).

14. Dispositif selon la revendication 13, caractérisé en ce que le pène (73) comprend un linguet (730) avec une articulation (731), un bec (732) et un appui (733) et qui est mobile entre une position active où il immobilise le ruban (42) par rapport à l'entretoise (30) et une position inactive où il est neutralisé et rend libre l'un par rapport à l'autre le ruban (42) et l'entretoise (30).

**15.** Dispositif selon l'une quelconque des revendications 7 à 14, caractérisé en ce qu'il comprend une fixation (320) pour maintenir l'entretoise (30) sur la structure (10).

**16.** Dispositif selon la revendication 15, caractérisé en ce que la fixation (320) comprend au moins un pion élastique encliquetable destiné à s'engager dans un trou (12) de la structure (10).

**17.** Dispositif selon l'une quelconque des revendications 7 à 16, caractérisé en ce que l'embase (21) est munie sur sa face destinée à recevoir le talon (61) du tourillon (60) d'ailes saillantes sur les bords de la fente (210) et de formes en relief qui entourent partiellement les découpes (212).

**Claims**

**1.** Retention device for safety belt band with manually adjustable position and intended to be secured to a structure (10), comprising inter alia a body (20) with base (21) in which a slot (210) has been made, mounts (22) for anchoring to the structure (10) and a band support (50) connected to the body (20) and movable relative to the latter in which the base (21) and the body anchoring mounts (22) are arranged so as to form a recess (211) at the rear of the slot (210), the slot (210) is provided at least at each of its ends with cutouts (212) at least partially circular, the diameter of which is greater than the width of the slot (210) and in which the band support (50) in which an opening (52) has been made and the body (20) are joined by means of a journal (60) which comprises a butt (61) having at least one dimension greater than that of the cutouts, a shank (62) and an endpiece (63) carrying the fastening devices (631, 632), the cross-section of this shank (62) having along its entire length a noncircular contour inscribable in the cutouts with two orthogonal transverse axes, one, the major axis, being exactly equal to the diameter of the cutout and the other, the smaller axis, being exactly equal to the width of the slot (210) and being oriented in its normal position so that its major axis is not parallel to the slot (210) so that when the journal (60) engaged in a cutout (212) is deliberately made to tilt on its axis, the transverse major axis is made parallel to the slot (210) so that it can be moved there together with the band support (50), the device characterized in that the endpiece (63) carries the gripping members and in that this journal (60) is arranged in such a way that the butt (61) is housed in line with the recess (211), the shank (62) passes through the body (20) and the band support (50) which is engaged there by means of its opening (52) and is secured there by means of the retention devices.

**2.** Device according to claim 1, characterized in that the body (20) is shaped like a stirrup in which the anchoring mounts (22) have a branch (221) perpendicular to the base (21) and terminated by a rim (222).

**3.** Device according to claim 1 or 2, characterized in that the shank (62) takes the form of a cylinder with two diametrically opposed flats (621).

**4.** Device according to any one of claims 1 to 3, characterized in that the opening (52) of the band support (50) has a profile (521) which matches that of the contour of the shank (62) so that the band support (50) is integral in rotation with the journal (60) and acts as a gripping member.

**5.** Device according to any one of claims 1 to 4, characterized in that the fastening devices comprise a thread (631) of the endpiece (63) and a nut (632).

**6.** Device according to any one of claims 1 to 5, characterized in that a passage (54) is made through the band support (50), through which a band can pass freely and in which it can travel.

**7.** Device according to any one of claims 1 to 6, characterized in that an oblong opening (11) is made in the structure (10), in that the slot (210), in addition to the successive cutouts (212), has an aperture (2110), the dimension of which is at least equal to that of the butt (61) in order to allow its passage, in that it comprises a spacer (30) made of a plate (32) connected to a bed (31), the dimension of which makes it possible to insert it into the oblong slot (11) and which is pierced with a slot (310) and cutouts (312) virtually identical to those of the body (20) and intended to be matched up with these and which is provided with a protuberance (312), the dimension of which is at least equal to that of the aperture (2110) to allow it to fill the latter and in that the spacer (30) is intended to be located so that its plate (32) rests against the structure (10) and its bed (31) is engaged in the oblong slot (11) so that the slots and cutouts of the body (20) and spacer (30) are respectively in line with one another and so that the protuberance (311) fills the aperture (2110), and in that the journal (60) is intended to be sited in such a way that the butt (61) can be arranged opposite the recess (211), the shank (62) can pass through the structure (10), the body (20), the spacer (30) and the band support (50) which can be engaged there by means of its opening (52) and secured there by means of the retention devices so that when the journal (60) engaged in a pair of cutouts (212, 312) is deliberately made to tilt using the gripping members, the major transverse axis is made parallel to slots (210, 310) so that it can move there together with the band support (50).

8. Device according to claim 7, characterized in that the body (20) is intended to be made integral with the structure (10) and in that at least the spacer (30), the journal (60) and if necessary the band support (50) form an independent unit attached to the structure (10).

9. Device according to claim 8, characterized in that the unit (30, 60) is intended to be placed blind on the structure (10) in order to be connected to the body (20).

10. Device according to any one of claims 7 to 9, characterized in that the opening (52) of the band support (50) has a profile (521) which matches that of the contour of the shank (62), so that the band support (50) is integral in rotation with the journal (60) and acts as a gripping member.

11. Device according to any one of claims 7 to 10, characterized in that the spacer (30) is provided with a protection system (40) to prevent foreign bodies from entering the device.

12. Device according to claim 11, characterized in that the protection system (40) comprises a spacer (30) which is provided with an incision (41) oriented virually parallel to the plane of the plate (32) and opening into the slot (310) and on to the contour of the bed (31), and a strip (42) which is mounted so that it slides in the incision (41) and pierced with a port to allow the free passage of the shank (62) of the journal (60) and the length of which is at least equal to twice the length of the bed (31).

13. Device according to claim 12, characterized in that it comprises a locking mechanism (70) with a latch (73) connected to the spacer (30) and a keeper (74) connected to the strip (42).

14. Device according to claim 13, characterized in that the latch (73) comprises a catch (730) with a joint (731), a nose (732) and a stay (733) and which can move between an active position in which it immobilizes the strip (42) relative to the spacer (30) and an inactive position in which it is neutralized and frees the strip (42) and the spacer (30) from one another.

15. Device according to any one of claims 7 to 14, characterized in that it comprises a fastener (320) to keep the spacer (30) on the structure (10).

16. Device according to claim 15, characterized in that the fastener (320) comprises at least one snap-on elastic stud designed to engage into a hole (12) in the structure (10).

17. Device according to any one of claims 7 to 16, characterized in that the face of the base (21) which is intended to receive the butt (61) of the journal (60) is provided with protruding wings on the edges of the slot (210) and with relief shapes which partially surround the cutouts (212).

**Patentansprüche**

1. Haltevorrichtung für Sicherheitsgurte mit manueller Lageverstellung, zur Befestigung an einem Aufbau (10), gebildet durch u.a. einen Grundkörper (20) mit einer von einem Schlitz (210) durchsetzten Basisplatte (21) und Sockeln (22) zur Verankerung an dem Aufbau (10) und durch einen dem Grundkörper (20) zugeordneten und relativ zu diesem beweglichen Gurthalter (50), wobei die Basisplatte (21) und die Verankerungssockel (22) des Grundkörpers so angeordnet sind, daß ein Hohlraum (211) hinter dem Schlitz (210) gebildet wird, der Schlitz (210) wenigstens an seinen beiden Enden mit Ausschnitten (212) versehen ist, die zumindest teilweise kreisförmig sind und deren Durchmesser größer als die Breite des Schlitzes (210) ist, und wobei der Gurthalter (50), der von einer Öffnung (52) durchsetzt ist, und der Grundkörper (20) mit Hilfe eines Drehzapfens (60) verbunden sind, der gebildet wird durch ein Fußstück (61), dessen Abmessung wenigstens in einer Richtung größer ist als die der Ausschnitte, einen Schaft (62) und einen Ansatz (63), der Befestigungsmittel (631, 632) trägt, wobei der Querschnitt des Schaftes (62) auf seiner gesamten Länge eine nichtkreisförmige Kontur aufweist, die in die Aussparungen einbeschreibbar ist und zwei orthogonale Hauptachsen aufweist, von denen die größere in der Länge knapp dem Durchmesser des Ausschnitts entspricht und die andere in der Länge knapp der Breite des Schlitzes (210) entspricht und die in der Normalstellung so orientiert sind, daß die große Hauptachse nicht parallel zu dem Schlitz (210) ist, so daß, wenn man den in dem Ausschnitt (212) gehaltenen Drehzapfen (60) absichtlich um seine Achse dreht, die große Achse parallel zu dem Schlitz (210) ausgerichtet wird, um den Drehzapfen zusammen mit dem Gurthalter (50) verstellen zu können, dadurch **gekennzeichnet, daß** der Ansatz (63) Handhabungsorgane trägt und daß der Drehzapfen (60) so angeordnet ist, daß das Fußstück (61) dem Hohlraum (211) zugewandt liegt, der Schaft (62) den Grundkörper (20) und den Gurthalter (50) durchquert, der über seine Öffnung (52) mit dem Drehzapfen in Eingriff steht und dort durch die Haltemittel fixiert ist.

2. Haltevorrichtung nach Anspruch 1, dadurch **gekennzeichnet, daß** der Grundkörper (20) die Form eines Bügels hat, wobei die Verankerungssockel (22) einen Arm (221) bilden, der rechtwinklig zu der Basisplatte (21) orientiert ist und in einem Randflansch (222) endet.

3. Haltevorrichtung nach Anspruch 1 oder 2, dadurch **gekennzeichnet, daß** der Schaft (62) die Form eines Zylinders mit zwei einander diametral gegenüberliegenden Abflachungen (621) hat.

4. Haltevorrichtung nach einem der Ansprüche 1 bis 3, dadurch **gekennzeichnet, daß** die Öffnung (52) des Gurthalters (50) eine Querschnittsform (521) aufweist, die zu derjenigen des Umrisses des Schaftes (62) komplementär ist, so daß der Gurthalter (50) drehfest mit dem Drehzapfen (60) verbunden ist und als Handhabe dient.

5. Haltevorrichtung nach einem der Ansprüche 1 bis 4, dadurch **gekennzeichnet, daß** die Befestigungsmittel durch ein Gewinde (631) des Ansatzes (63) und durch eine Mutter (632) gebildet werden.

6. Haltevorrichtung nach einem der Ansprüche 1 bis 5, dadurch **gekennzeichnet, daß** der Gurthalter (50) einen Durchbruch (54) aufweist, der frei von einem durchziehbaren Gurt durchlaufen wird.

7. Haltevorrichtung nach einem der Ansprüche 1 bis 6, dadurch **gekennzeichnet, daß** der Aufbau (10) von einer länglichen Aussparung (11) durchbrochen ist, daß der Schlitz (210) außer der Folge von Ausschnitten (212) eine Öffnung (2110) aufweist, deren Größe wenigstens gleich derjenigen des Fußstückes (61) ist, um dessen Durchtritt zu ermöglichen, daß die Vorrichtung ein Zwischenstück (30) aufweist, das gebildet wird durch eine Platte (32) in Verbindung mit einer Bank (31), deren Größe es gestattet, die Bank in die längliche Aussparung (11) einzustecken, und die von einem Schlitz (310) und Ausschnitten (312) durchbrochen ist, die praktisch mit denen des Grundkörpers (20) identisch sind und dazu bestimmt sind, entsprechend zu den letzteren positioniert zu werden, und die mit einem Vorsprung (312) versehen ist, dessen Größe höchstens gleich derjenigen der Öffnung (2110) ist, so daß sie diese ausfüllen kann, und daß das Zwischenstück (30) dazu bestimmt ist, derart positioniert zu werden, daß seine Platte (32) an dem Aufbau (10) anliegt und seine Bank (31) so in die Aussparung (11) eingreift, daß die Schlitze und Ausschnitte des Grundkörpers (20) und des Zwischenstücks (30) miteinander ausgerichtet sind und der Vorsprung (311) die Öffnung (2110) ausfüllt, und daß der Drehzapfen (60) dazu bestimmt ist, derart positioniert zu werden, daß das Fußstück (61) dem Hohlraum (211) gegenüberliegt, der Schaft (62) den Aufbau (10), den Grundkörper (20), das Zwischenstück (30) und den Gurthalter (50) durchqueren kann, der sich durch seine Öffnung (52) mit dem Schaft in Eingriff bringen läßt, und sich durch die Haltemittel daran befestigen läßt, so daß man, wenn man den in einem Paar der Ausschnitte (212,312) gehaltenen Drehzapfen (60) absichtlich mit Hilfe der Handhabungsorgane verdreht, die große Achse parallel zu den Schlitzen (210,310) ausrichtet, um den Drehzapfen zusammen mit dem Gurthalter (50) verstellen zu können.

8. Haltervorrichtung nach Anspruch 7, dadurch **gekennzeichnet, daß** der Grundkörper (20) zur starren Befestigung an dem Aufbau (10) bestimmt ist und daß wenigstens das Zwischenstück (30) und der Drehzapfen (60) sowie gegebenenfalls auch der Gurthalter (50) zusammen eine selbständige, an dem Aufbau (10) angebrachte Einheit bilden.

9. Haltevorrichtung nach Anspruch 8, dadurch **gekennzeichnet, daß** die Einheit (30,60) dazu bestimmt ist, blind an dem Aufbau (10) positioniert zu werden, um mit dem Grundkörper (20) verbunden zu werden.

10. Haltevorrichtung nach einem der Ansprüche 7 bis 9, dadurch **gekennzeichnet, daß** die Öffnung (52) des Gurthalters (50) eine Querschnittsform (521) aufweist, die zu derjenigen der Kontur des Schaftes (62) komplementär ist, so daß der Gurthalter (50) drehfest mit dem Drehzapfen (60) verbunden ist und als Handhabe dient.

11. Haltevorrichtung nach einem der Ansprüche 7 bis 10, dadurch **gekennzeichnet,** daß das Zwischenstück (30) mit einem Schutzsystem (40) versehen ist, das das Eindringen von Fremdkörpern in die Vorrichtung verhindert.

12. Haltevorrichtung nach Anspruch 11, dadurch **gekennzeichnet,** daß zu dem Schutzsystem (40) ein Zwischenstück (30), das mit einem im wesentlichen parallel zu der Platte (32) liegenden, sich in den Schlitz (310) und in die Außenkontur der Bank (31) öffnenden Einschnitt (41) versehen ist, und ein Band (42) gehören, das verschiebbar in dem Einschnitt (41) angeordnet und von einem Auge (420) für den freien Durchtritt des Schaftes (62) des Drehzapfens (60) durchsetzt ist und dessen Länge wenigstens gleich dem zweifachen der Länge der Bank (31) ist.

13. Haltevorrichtung nach Anspruch 12, dadurch **gekennzeichnet,** daß sie elnen Riegel (70) mit einer dem Zwischenstück (30) zugeordneten Klinke (73) und einer dem Band (240) zugeordneten Falle (74) aufweist.

14. Haltevorrichtung nach Anspruch 13, dadurch **gekennzeichnet,** daß die Klinke (73) einen Sperrhebel (730) mit einem Gelenk (731), einer Nase (732) und einem Anschlag (733) aufweist, der zwischen einer Wirkstellung, in welcher er das Band (42) in bezug auf das Zwischenstück (30) fixiert, und einer Ruhestellung beweglich ist, in welcher er unwirksam ist und das Band (42) und das Zwischenstück (30) relativ zueinander freigibt.

15. Haltevorrichtung nach einem der Ansprüche 7 bis 14, dadurch **gekennzeichnet,** daß sie eine Befestigungseinrichtung (320) zum Halten des Zwischenstücks (30) an dem Aufbau (10) aufweist.

16. Haltevorrichtung nach Anspruch 15, dadurch **gekennzeichnet,** daß die Befestigungseinrichtung (320) wenigstens einen elastischen Rastkörper aufweist, der für den Eingriff in ein Loch (12) des Aufbaus (10) vorgesehen ist.

17. Haltevorrichtung nach einem der Ansprüche 7 bis 16, dadurch **gekennzeichnet,** daß die Basisplatte (21) auf ihrer das Fußstück (61) des Drehzapfens (60) aufnehmenden Oberfläche mit vorspringenden Flügeln an den Rändern des Schlitzes (210) und mit Reliefstrukturen versehen ist, die die Ausschnitte (212) teilweise umgeben.

# FIG.1

# FIG.2

14

FIG.3

FIG.4A

FIG.4B

FIG.5

16